# EUROPEAN PATENT APPLICATION

(11) **EP 1 933 321 A2**
(43) Date of publication of application: **18.06.2008**
(21) Application number: 07023859.7
(22) Date of filing: 10.12.2007
(51) Int. Cl.: G11B 20/18, G11B 27/034

(54) **Optical disc apparatus**

(30) Priority: 12.12.2006 JP 2006334051
(71) Applicant: Funai Electric Co., Ltd., Daito-shi Osaka 574-0013 (JP)
(72) Inventor: Noda, Ryusuke, Osaka 574-0013 (JP)
(74) Representative: Beetz & Partner

(57) **Abstract**

An optical disc apparatus has a structure including: a storage medium; a readout portion that reads out data from at least one Defect Management Area (DMA) or at least one group of the DMAs which is included in a Blu-ray Disc REwritable (BD-RE); a storing portion that stores one of the data which is read out by the readout portion, in the storage medium; an erasing portion that erases the data which is read out by the readout portion, from the at least one DMA or the at least one group of the DMAs; and a recording portion that records the data which is stored in the storage medium, in at least one DMA or at least one group of the DMAs which is included in BD-RE.

## Description

### BACKGROUND OF THE INVENTION

### Field of the Invention

The present invention relates to an optical disc apparatus.

### Description of the Related Art

Recently an optical disc having a larger recording capacity than a DVD and called as a Blu-ray Disc has appeared. There are some kinds of the Blu-ray Discs, and among them, there is a Blu-ray Disc Rewritable (BD-RE) which is characterized by phase-change recording and is rewritable.

The BD-RE has areas which are called as a user data zone, and a Defect Management Area (DMA). In recording utilizing the BD-RE, user data is recorded in the user data zone and information and the like of recording state of the user data zone is recorded in the DMA. Further, it is possible to erase all the user data which are recorded in the user data zone, and it is possible to reuse all the user data zone.

However, because the BD-RE has large recording capacity (for a single layer disc, three kinds of discs which have capacity of 23 G bytes, 25 G bytes, and 27 G bytes are defined in the standard specification, and when they are double layer discs they have two times more of them), very long time is taken when all the user data are erased. As a result, there is a conventional optical disc apparatus which has an operation mode called a high speed erasing mode. In the high speed erasing mode, the user data are not erased but the data which are recorded in the DMA are erased. An optical disc recorded in the DMA are erased.

As for a conventional art which relates to the present invention, for example, an invention about initializing of floppy disk (registered trade mark) is disclosed in JP-A-H5-290514.

However, in an optical disc apparatus of the conventional art as above described, there is a problem that there is no way when a user desires to make the user data remaining in the BD-RE without erased possible to be readout again after the high speed erasing process is performed.

### SUMMARY OF THE INVENTION

It is an object of the present invention to provide an optical disc apparatus that can make a user data possible to be read again when a user desires to make the user data possible to be read again even after a high speed erasing process is performed for a BD-RE.

To attain the above described object an optical disc apparatus in accordance with the present invention having a storage medium has a structure including: a readout portion that reads out data from at least one Defect Management Area (DMA) or at least one group of the DMAs which is included in a Blu-ray Disc REwritable (BD-RE); a storing portion that stores one of the data which is read out by the readout portion, in the storage medium; an erasing portion that erases the data which is read out by the readout portion, from the at least one DMA or the at least one group of the DMAs; and a recording portion that records the data which is stored in the storage medium, in at least one DMA or at least one group of the DMAs which is included in BD-RE.

By a structure like this, when a user desires to make the user data possible to be read again even after the high speed erasing process has been performed for a BD-RE, the data of the DMA can be recovered in the BD-RE and the user data is made possible to be read again.

The optical disc apparatus in accordance with the present invention has a structure in that the storing portion stores latest recording date and hour information which is recorded on BD-RE and/or a Manufacturer's Identification (MID) code which is recorded on BD-RE, in the storage medium, and the recording portion switches whether the recording is performed or not in response to comparison result between latest recording date and hour information which is recorded on BD-RE and latest recording date and hour information which is stored in the storage medium, and/or a comparison result between MID code which is recorded on BD-RE and MID code which is stored in the storage medium, in the above described structure.

By a structure like this, even when a disc is removed from the apparatus after the high speed erasing process, and another disc is loaded onto the apparatus, the disc can be excluded from an object of the recovery process.

The optical disc apparatus in accordance with the present invention has a structure further including a confirming portion that confirms conformance of the data that is recorded in the DMA or in the group of the DMAs in which the recording is performed after the recording portion performs the recording, with user data which is recorded in user data zone which is included in the BD-RE, in the above described structure.

By a structure like this, user can confirm if the disc recovery process succeed or fail.

The optical disc apparatus in accordance with the present invention has a structure in that in response to result whether or not respective data which are read out by the readout portion from a plurality of the DMAs or from a plurality of groups of the DAMs are same, the storage portion switches whether the storage is performed or not, and the erasing portion switches whether the erasing is performed or not, in the above described structure.

By a structure like this, the high speed erasing process can be interrupted if there is a possibility that the data of the DMA is broken.

To attain the above described object an optical disc apparatus in accordance with the present invention has a structure including: a readout portion that reads out data from at least one Defect Management Area (DMA) or at least one group of the DMAs which is included in a Blu-ray Disc REwritable (BD-RE); a first recording portion that records one of the data which is read out by the readout portion, in a prescribed zone which is included in the BD-RE; an erasing portion that erases the data which is read out by the readout portion, from the at least one DMA or the at least one group of the DMAs; and a second recording portion that records data which is recorded in the prescribe zone, in at least one DMA or at least one group of the DMAs which is included in BD-RE.

By a structure like this too, when a user desires to make the user data possible to be read again even after the high speed erasing process has been performed for a BD-RE, the data of the DMA can be recovered in the BD-RE and the user data is made possible to be read again.

The optical disc apparatus in accordance with the present invention has a structure in that the first recording portion records drive specific information and/or latest recording date and hour information which is recorded on the BD-RE, in the prescribed zone, and the second recording portion switches whether the recording is performed or not in response to result whether drive specific information which is recorded in the prescribed zone, designates one of prescribed drives and/or in response to comparison result between latest recording date and hour information which is recorded on BD-RE and latest recording date and hour information which is recorded in the prescribed zone, in the above described structure.

By a structure like this, a disc which has been processed by an optical disc apparatus that is not compatible or a disc on which the user data is newly recorded after the high speed erasing process, can be excluded from the object of the recovery process.

The optical disc apparatus in accordance with the present invention has a structure further including a confirming portion that confirms conformance of the data that is recorded in the DMA or in the group of the DMAs in which the recording is performed after the second recording portion performs the recording, with user data which is recorded in user data zone which is included in the BD-RE, in the above described structure.

By a structure like this, user can confirm if the disc recovery process succeed or fail.

The optical disc apparatus in accordance with the present invention has a structure in that in response to result whether or not respective data which are read out by the readout portion from a plurality of the DMAs or from a plurality of groups of the DMAs are same, the first recording portion switches whether the recording is performed or not, and the erasing portion switches whether the erasing is performed or not, in the above described structure.

By a structure like this, the high speed erasing process can be interrupted if there is a possibility that the data of the DMA is broken.

### DESCRIPTION OF THE DRAWINGS

Fig. 1 is a block diagram of an optical disc apparatus according to the present invention.
Fig. 2 is a structural diagram of a lead-in zone which is included in a single layer disc of a BD-RE.
Fig. 3 is a structural diagram of a lead-out zone which is included in a single layer disc of a BD-RE.
Fig. 4 is a structural diagram of a single layer disc of a BD-RE and a double layer disc of a BD-RE.
Fig. 5A is a flowchart of a first embodiment of a high speed erasing process according to the present invention.
Fig. 5B is a flowchart of a first embodiment of a high speed erasing process according to the present invention.
Fig. 6A is a flowchart of a first embodiment of a disc recovery process according to the present invention.
Fig. 6B is a flowchart of a first embodiment of a disc recovery process according to the present invention.
Fig. 7A is a flowchart of a second embodiment of a high speed erasing process according to the present invention.
Fig. 7B is a flowchart of a second embodiment of a high speed erasing process according to the present invention.
Fig. 8A is a flowchart of a second embodiment of a disc recovery process according to the present invention.
Fig. 8B is a flowchart of a second embodiment of a disc recovery process according to the present invention.

### DESCRIPTION OF THE PREFERRED EMBODIMENTS

Hereinafter, embodiments of the present invention will be described with reference to the accompanied drawings.

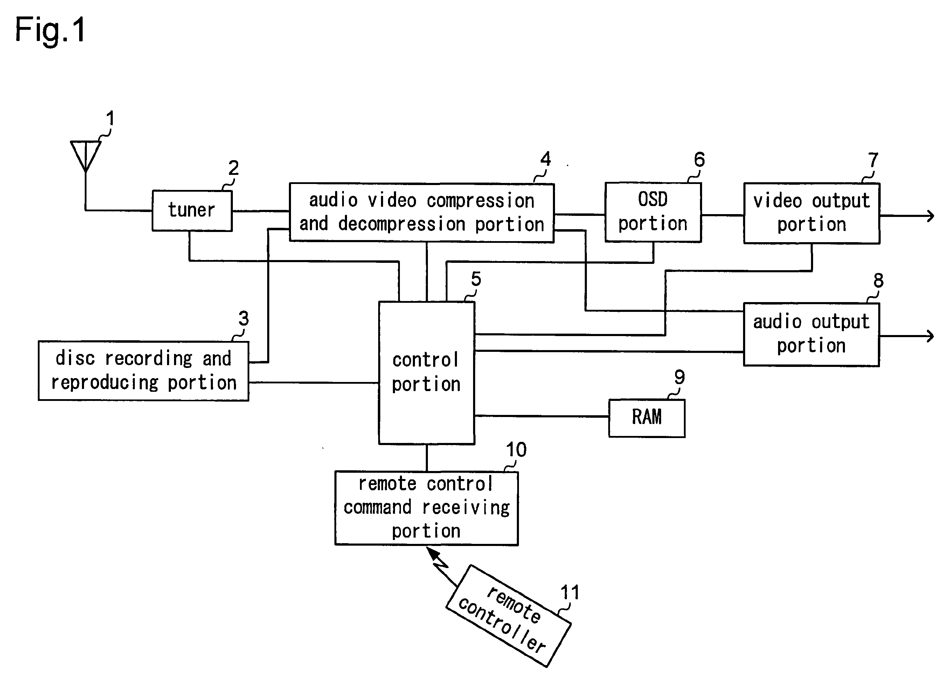

In Fig. 1, a block diagram of an optical disc apparatus according to the present invention is shown. The optical disc apparatus according to the present invention is equipped with a tuner 2, a disc recording and reproducing portion 3, an audio video compression and decompression portion 4, a control portion 5, an OSD portion 6, a video output portion 7, an audio output portion 8, a RAM 9, and a remote control command receiving portion 10. An antenna 1 is connected to the tuner 2, and a television or the like is connected to the video output portion 7 and the audio output portion 8.

The antenna 1 converts a radio wave signal into a high frequency signal to output it to the tuner 2. The tuner 2 extracts a high frequency signal of a channel corresponding to tuning control of the control portion 5 from the high frequency signal of the antenna 1 to output a video signal and an audio signal to the audio video compression and decompression portion 4. The audio video compression and decompression portion 4 compresses the video signal and the audio signal from the tuner 2 to output them to the disc recording and reproducing portion 3, and decompresses the video signal and the audio signal from the disc recording and reproducing portion 3 to output the video signal to the OSD portion 6 and the audio signal to the audio output portion 8.

The disc recording and reproducing portion 3 performs reading out data from, recording data to, and erasing data from, a disc which is loaded. The OSD portion 6 generates a graphic and character signal by a command from the control portion 5 and combine the graphic and character signal with the video signal from the audio video compression and decompression portion 4 to output the combined signal to the video output portion 7. Further, the OSD portion 6 sometimes outputs the graphic and character signal to the video output portion 7 without performing the combination described above. The video output portion 7 converts the combined signal and the graphic and character signal from the OSD portion 6 into a video signal to output them to the television or the like. The audio output portion 8 converts the audio signal from the audio video compression and decompression portion 4 into an analog signal to output it to the television or the like. The remote control command receiving portion 10 receives an infrared signal from a remote controller 11 to output a coded signal to the control portion 5.

### First Embodiment

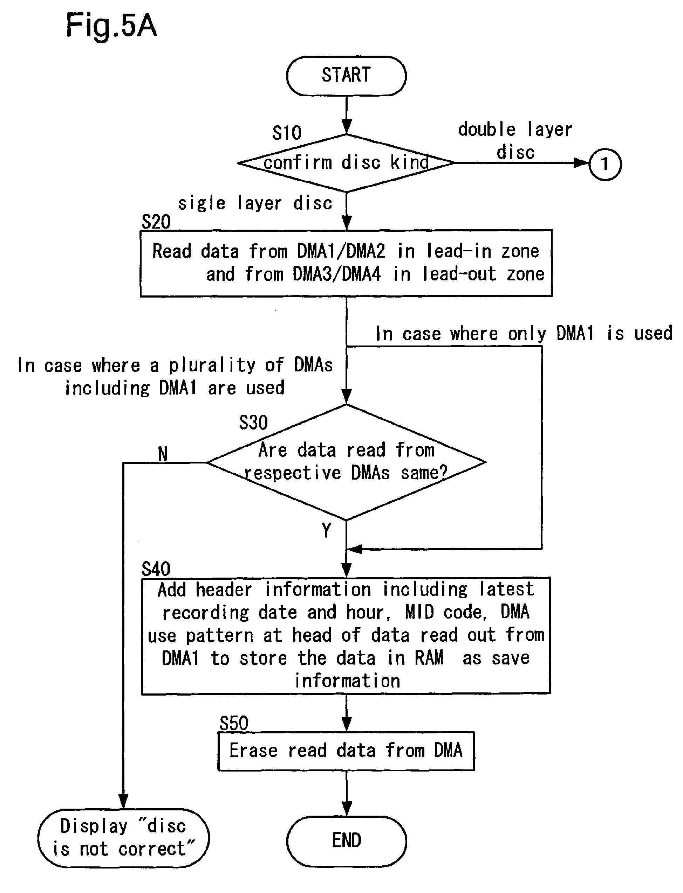

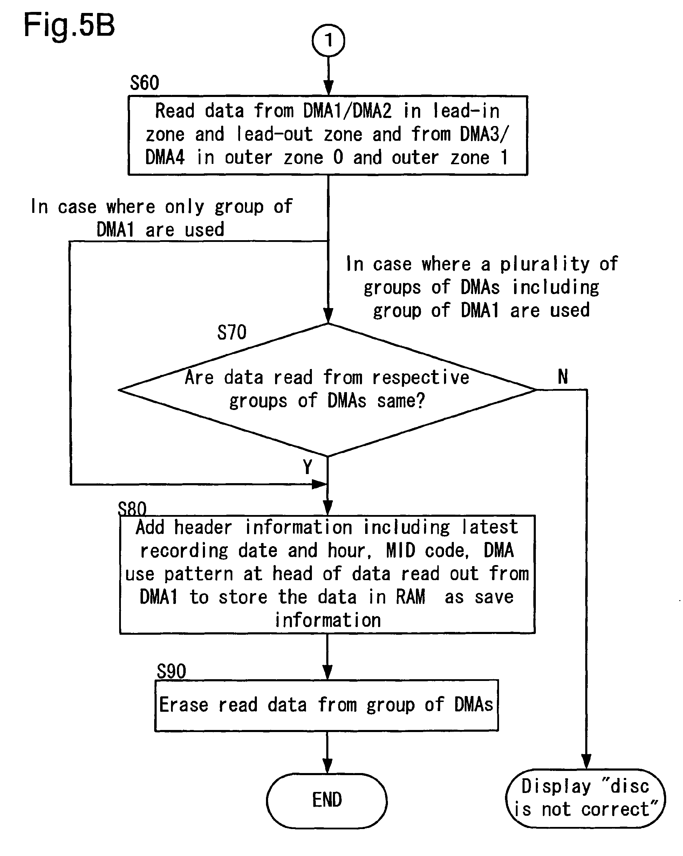

Next, a first embodiment of high speed erasing process by the optical disc apparatus which is structured as above according to the present invention will be explained with reference to a flow chart shown in Fig. 5A and Fig. 5B.

When an operation to start the high speed erasing process is performed in the remote controller 11, the control portion 5 receives a coded signal from the remote control command receiving portion 10, the control portion 5 confirms a disc kind information which is stored in the RAM 9 in step S10. The disc kind information is information of the disc kind which the control portion 5 recognizes and stores in the RAM 9 when a disc is loaded into the disc recording and reproducing portion 3. In case where the disc kind information designates a single layer disc of a BD-RE, the process proceeds to step S20.

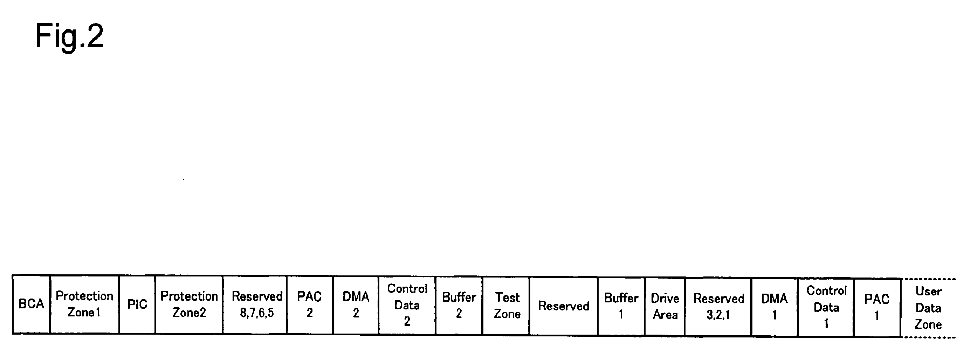

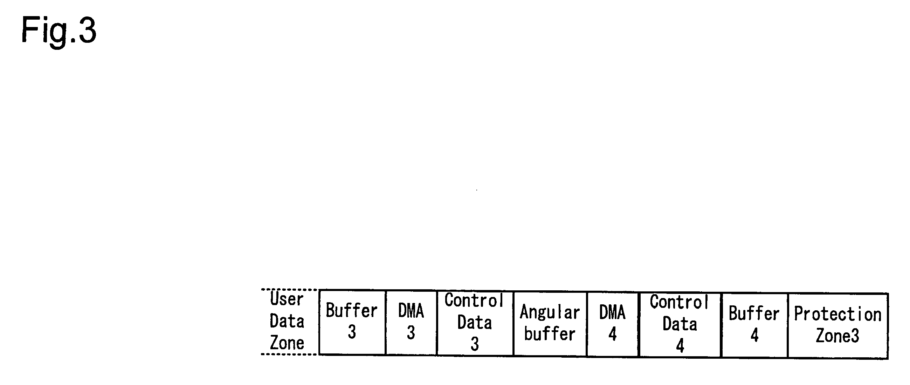

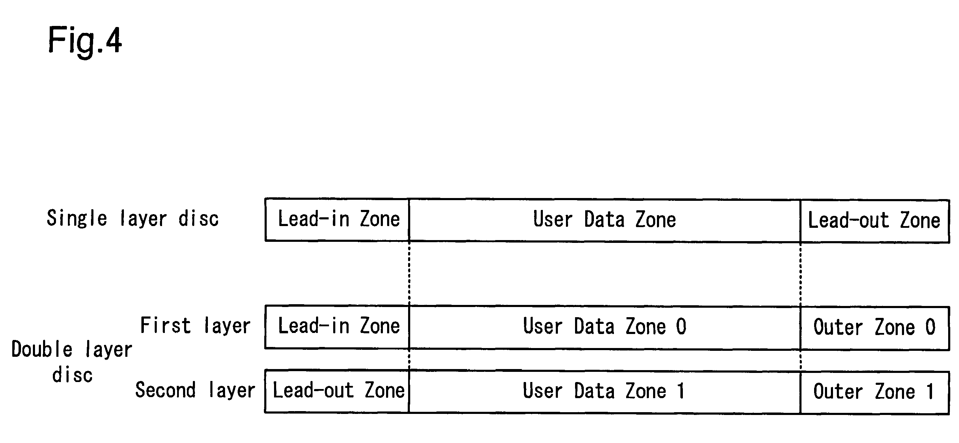

Fig. 2 shows a structure of lead-in zone which is included in the single layer disc of BD-RE, and Fig. 3 shows a structure of lead-out zone which is included in the single layer disc of BD-RE. As shown in upper part of Fig. 4, the lead-in zone, user data zone, and the lead-out zone are arranged on a disc from inner side to outer side. User data is recorded in the user data zone. The lead-in zone has DMA1 and DMA2 which are two Defect Management Areas (DMAs), and the lead-out zone has DMA3 and DMA4 which are two DMAs. The DMA records information of recording state of the user data zone and the like. There are cases where only DMA1 is used and where a plurality of DMAs including DMA1 are used (for example, all of DMA1 to DMA4 are used, or the like). In case where the plurality of DMAs including DMA1 are used, same data are recorded in each of the DMAs. The latest date and time information (latest recording date and hour information) when the user data is recorded lastly is also recorded on the disc.

In step S20, by an instruction from the control portion 5 the disc recording and reproducing portion 3 performs data reading out process sequentially from the DMA1, DMA2, DMA3, and DMA4. In case where the data is recorded only in the DMA1, the process proceeds to step S40 which will be described later. In case where the data are recorded in a plurality of DMAs including DMA1, the process proceeds to step S30.

In step S30, the control portion 5 judges whether the data which are read from the respective DMAs are the same or not. When they are not the same (N in step S30), there is a possibility that the data recorded in the DMAs are broken, therefore, the control portion 5 makes an instruction for the OSD portion 6 to generate the graphic and character signal to display on a television or the like that the disc is not correct and the high speed erasing process is interrupted. In step S30, in case where the data which are read out from the respective DMAs are judged to be the same (Y in step S30), the process proceeds to step S40.

In step S40, the control portion 5 adds a header information at a head of the data which is read out from the DMA1 to store the data in the RAM 9 as a save information. At this point the header information is the latest recording date and hour information and Manufacturer's Identification (MID) code which are recorded on the disc, and in addition, DMA use pattern information. The DMA use pattern information is information which designates the DMA that is used.

In step S50, by an instruction from the control portion 5 the disc recording and reproducing portion 3 erases the data which is read out in step S20 from the DMA. In case where only the DMA1 is used, the data is erased only from the DMA1, and in case where the plurality of DMAs including the DMA1 are used, the data are erased from the respective DMAs. The high speed erasing process is completed and the disc becomes a state which is equivalent to a blank disc.

In the above described step S10, in case where the disc kind information designates a double layer disc of a BD-RE, the process proceeds to step S60 (Fig. 5B).

In lower part of Fig. 4, a structure of the double layer disc of BD-RE is shown. A lead-in zone, a user data zone, and an outer zone are arranged from inner side to outer side on the first layer of a disc. The lead-in zone is structured as shown in Fig. 2 and has the DMA1 and the DMA2. The outer zone is structured as shown in Fig. 3 and has the DMA3 and the DMA4. Further on the second layer of the disc, the lead-out zone, the user data zone, and the outer zone are arranged from the inner side to the outer side. The lead-out zone is structured substantially as shown in Fig. 2 and has the DMA1 and the DMA2. The outer zone is structured as shown in Fig. 3 and has the DMA3 and the DMA4. The DMA1 on the first layer and the DMA1 on the second layer are used as a group and the DMA2, DMA3, and DMA4 are used similarly. There are a case where only the group of DMA1 are used and a case where a plurality of groups of DMAs including the group of DMA1 are used. In case where the plurality of groups of DMAs including the group of DMA1 are used, same data are recorded in the respective groups of DMAs. In addition, the latest recording date and hour information is also recorded on the disc.

In step S60 by an instruction from the control portion 5, the disc recording and reproducing portion 3 performs data reading process sequentially from the group of DMA1, the group of DMA2, the group of DMA3, and the group of DMA4. In case where the data are recorded only in the group of DMA1, the process proceeds to step S80 which will be described later. In case where the data are recorded in the groups of the plurality of DMAs including the group of DMA1, the process proceeds to step S70.

In step S70, the control portion 5 judges whether the data which are read from the respective groups of DMAs are the same or not. When they are not the same (N in step S70), there is a possibility that the data recorded in the groups of DMAs are broken, therefore, the control portion 5 makes an instruction for the OSD portion 6 to generate the graphic and character signal to display on a television or the like that the disc is not correct and the high speed erasing process is interrupted. In case where the data which are read out from the respective groups of DMAs are judged to be the same in step S70 (Y in step S70), the process proceeds to step S80.

In step S80, the control portion 5 adds a header information at a head of the data which are read out from the group of DMA1 to store the data in the RAM 9 as a save information. At this point the header information is the latest recording date and hour information and MID code which are recorded on the disc, and in addition, DMA use pattern information. The DMA use pattern information is information which designates the group of DMAs that are used.

In step S90, by an instruction from the control portion 5 the disc recording and reproducing portion 3 erases the data which are read out in step S60 from the groups of DMAs. In case where only the group of DMA1 are used, the data are erased only from the group of DMA1, and in case where a plurality of groups of DMAs including the group of DMA1 are used, the data are erased from the respective groups of DMAs. The high speed erasing process is completed and the disc becomes a state which is equivalent to the blank disc.

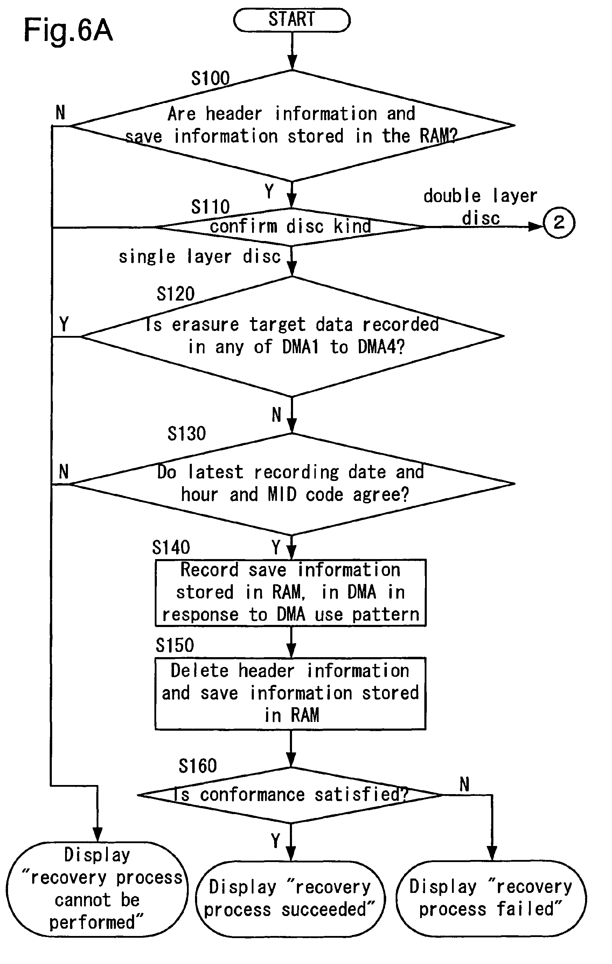

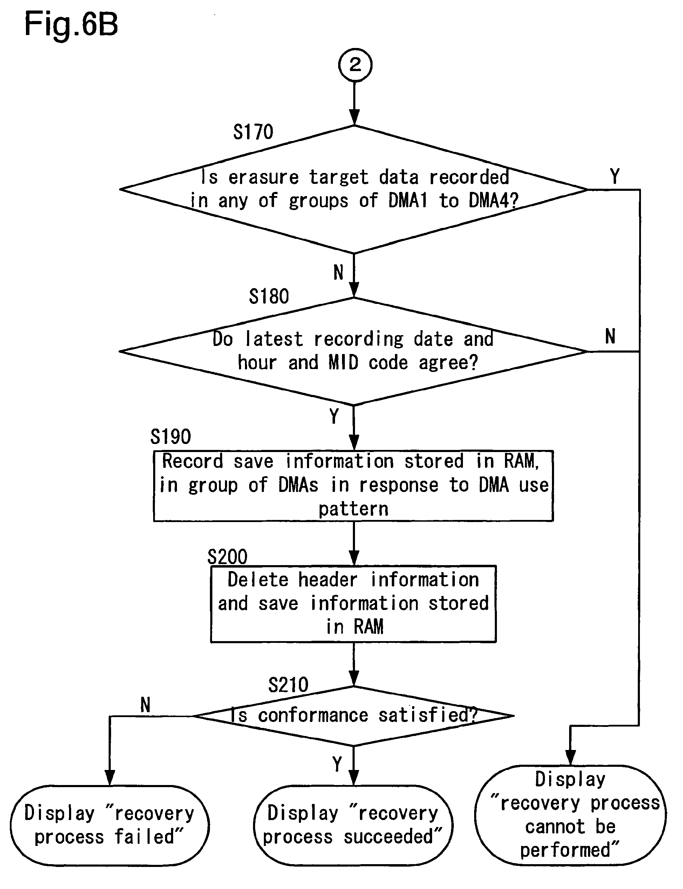

Next, a first embodiment of disc recovery process by the optical disc apparatus according to the present invention will be explained with reference to a flow chart shown in Fig. 6A and Fig. 6B.

When an operation to start the disc recovery process is performed in the remote controller 11 and the control portion 5 receives a coded signal from the remote control command receiving portion 10, the control portion 5 confirms whether the header information and the save information are stored in the RAM 9 or not in step S100. In case where they are not stored (N in step S100), the control portion 5 makes an instruction for the OSD portion 6 to generate the graphic and character signal to display on a television or the like that the disc recovery process cannot be performed and the disc recovery process is interrupted. In step S100, when the header information and the save information are confirmed to be stored in the RAM 9 (Y in step S100), the process proceeds to step S110.

In step S110, the control portion 5 confirms the disc kind information which is stored in the RAM 9, and in case where the disc kind information designates a single layer disc of a BD-RE, the process proceeds to step S120.

In step S120, by utilizing the disc recording and reproducing portion 3, the control portion 5 confirms whether the above described erasure target data is recorded in any one of the DMA1 to DMA4 which is included in the disc or not. In case where it is recorded (Y in step S120), the control portion 5 makes an instruction for the OSD portion 6 to generate the graphic and character signal to display on a television or the like that the disc recovery process cannot be performed and the disc recovery process is interrupted. By this step it becomes possible to exclude any disc on which the user data is newly recorded after the high speed erasing process from an object of the recovery process. In case where the above described erasure target data is not recorded in any of the DMA1 to DMA4 in step S120 (N in step S120), the process proceeds to step S130.

In step S130, the control portion 5 confirms whether the latest recording date and hour information which is read out from the disc by the disc recording and reproducing portion 3 agrees with the latest recording date and hour information which is stored in the RAM 9, and the MID code which is read out from the disc by the disc recording and reproducing portion 3 agrees with the MID code which is stored in the RAM 9, or not. In case where any of the latest recording date and hour information and the MID code does not agree (N in step S130), the control portion 5 makes an instruction for the OSD portion 6 to generate the graphic and character signal to display on a television or the like that the disc recovery process cannot be performed and the disc recovery process is interrupted. By this step even when a disc is removed from the apparatus after the high speed erasing process, and another disc on which the high speed erasing process is performed is loaded onto the apparatus, the disc can be excluded from the object of the recovery process. In step S130 in case where both of the latest recording date and hour information and the MID code agree (Y in step S130), the process proceeds to step S140.

In step S140, by an instruction from the control portion 5, the disc recording and reproducing portion 3 records the save information which is stored in the RAM 9, in the DMA that is included in the disc in response to the DMA use pattern information that is stored in the RAM 9. For example, when the DMA use pattern information designates only the DMA1, the save information is recorded only in the DMA1 included in the disc. When the DMA use pattern information designates the DMA1 to DMA4, the save information is recorded in the DMA1 to DMA4 included in the disc.

Then in step S150, the control portion 5 deletes the header information and the save information which are stored in RAM 9.

In step S160, by utilizing the disc recording and reproducing portion 3, the control portion 5 confirms conformance of the data which is recorded in all the DMAs that are included in the disc and are used, with the user data which is recorded in the user data zone that are included in the disc. In case where the conformance is not satisfied for any of the DMAs that are used (N in step S160), the control portion 5 makes an instruction for the OSD portion 6 to generate the graphic and character signal to display on a television or the like that the recovery process fails. In case where the conformance is satisfied for all the DMAs that are used (Y in step S160), the control portion 5 makes an instruction for the OSD portion 6 to generate the graphic and character signal to display on a television or the like that the recovery process succeeds.

In step S110 described above, in case where the disc kind information designates the double layer disc of BD-RE, the process proceeds to step S170 (Fig. 6B).

In step S170, by utilizing the disc recording and reproducing portion 3, the control portion 5 confirms whether the above described erasure target data is recorded in any of the groups of DMA1 to DMA4 that are included in the disc, or not. In case where the data is recorded (Y in step S170), the control portion 5 makes an instruction for the OSD portion 6 to generate the graphic and character signal to display on a television or the like that the disc recovery process cannot be performed and the disc recovery process is interrupted. By this step it becomes possible to exclude any disc on which user data is newly recorded after the high speed erasing process from an object of the recovery process. Further in step S170, in case where above described erasure target data is not recorded in any of groups of the DMA1 to DMA4 (N in step S170), the process proceeds to step S180.

In step S180, the control portion 5 confirms whether the latest recording date and hour information which is read out from the disc by the disc recording and reproducing portion 3 agrees with the latest recording date and hour information which is stored in the RAM 9, and the MID code which is read out from the disc by the disc recording and reproducing portion 3 agrees with the MID code which is stored in the RAM 9, or not. In case where any of the latest recording date and hour information and the MID code does not agree (N in step S180), the control portion 5 makes an instruction for the OSD portion 6 to generate the graphic and character signal to display on a television or the like that the disc recovery process cannot be performed and the disc recovery process is interrupted. By this step even when a disc is removed from the apparatus after the high speed erasing process, and another disc on which the high speed erasing process is performed is loaded onto the apparatus, the disc can be excluded from the object of the recovery process. In step S180 in case where both of the latest recording date and hour information and the MID code agree (Y in step S180), the process proceeds to step S190.

In step S190, by an instruction from the control portion 5, the disc recording and reproducing portion 3 records the save information which is stored in the RAM 9, in the group of DMAs that are included in the disc in response to the DMA use pattern information that is stored in the RAM 9. For example, when the DMA use pattern information designates only the group of DMA1, the save information is recorded only in the group of DMA1 that are included in the disc. When the DMA use pattern information designates the groups of DMA1 to DMA4, the save information is recorded in the group of DMA1 to DMA4 that are included in the disc.

Then in step S200, the control portion 5 deletes the header information and the save information which are stored in RAM 9.

In step S210, by utilizing the disc recording and reproducing portion 3, the control portion 5 confirms conformance of the data which is recorded in all the groups of DMAs that are included in the disc and are used, with the user data which is recorded in the user data zone that are included in the disc. In case where the conformance is not satisfied for any of the groups of DMAs that are used (N in step S210), the control portion 5 makes an instruction for the OSD portion 6 to generate the graphic and character signal to display on a television or the like that the recovery process fails. In case where the conformance is satisfied for all the groups of DMAs that are used (Y in step S210), the control portion 5 makes an instruction for the OSD portion 6 to generate the graphic and character signal to display on a television or the like that the recovery process succeeds.

As above described according to the present embodiment, it becomes possible to make the user data possible to be read again by recovering the data of DMA saved in the RAM into the disc, when a user desires to make the user data possible to be read again even after the high speed erasing process is performed for a BD-RE and the disc is in a state which is equivalent to a blank disc.

In the above described first embodiment of the high speed erasing process, the latest recording date and hour information and the MID code are stored in the RAM 9 as the header information in step S40 and step S80, the control portion 5 may generate a specific Identification Data (ID) based on the latest recording date and hour information and the MID code which are recorded on the disc and store the specific ID in the RAM 9 as the header information. In such case, in the above described first embodiment of the disc recovery process, the control portion 5 may generate a specific ID based on the latest recording date and hour information and the MID code which are recorded on the disc and confirm whether the generated specific ID agrees with the specific ID which is stored in the RAM 9 in step S130 and step S180. At this time if the respective specific IDs agree with each other, the process proceeds to step S140 or step S190. In case where the respective specific IDs do not agree with each other, the process may display that the disc recovery process cannot be performed. By these steps too, even when a disc is removed from the apparatus after the high speed erasing process, and another disc on which the high speed erasing process is performed is loaded onto the apparatus, the disc can be excluded from the object of the recovery process.

In the above described first embodiment of the high speed erasing process, only the DMA use pattern information may be used as the header information in step S40 and step S80. In the above described first embodiment of the disc recovery process step S130 and step S180 may be omitted, if N is specified in step S120 then the process may proceed to step S140, and if N is specified in step S170 then the process may proceed to step S190. In such case, when a disc eject button which is included in the disc recording and reproducing portion 3, is pushed, and the disc recording and reproducing portion 3 ejects the loaded disc, the control portion 5 may delete the header information and the save information which are stored in the RAM 9. By these steps, even when a disc is removed from the apparatus after the high speed erasing process, and another disc is loaded onto the apparatus and the disc recovery process is started, because the header information and the save information are not stored in the RAM 9, a statement that the disc recovery process cannot be performed is displayed by judgment in step S100 and the above described another disc can be excluded from the object of the recovery process.

In addition, in the above described embodiment, the storage unit for the header information and the save information may be a hard disk or the like which is included in a hard disk drive other than the RAM.

### Second Embodiment

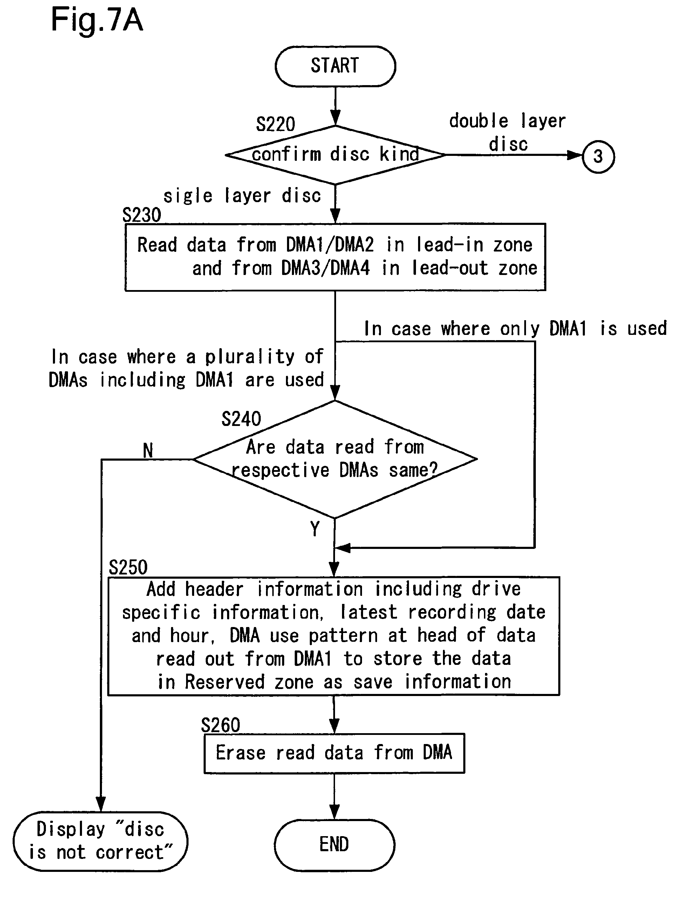

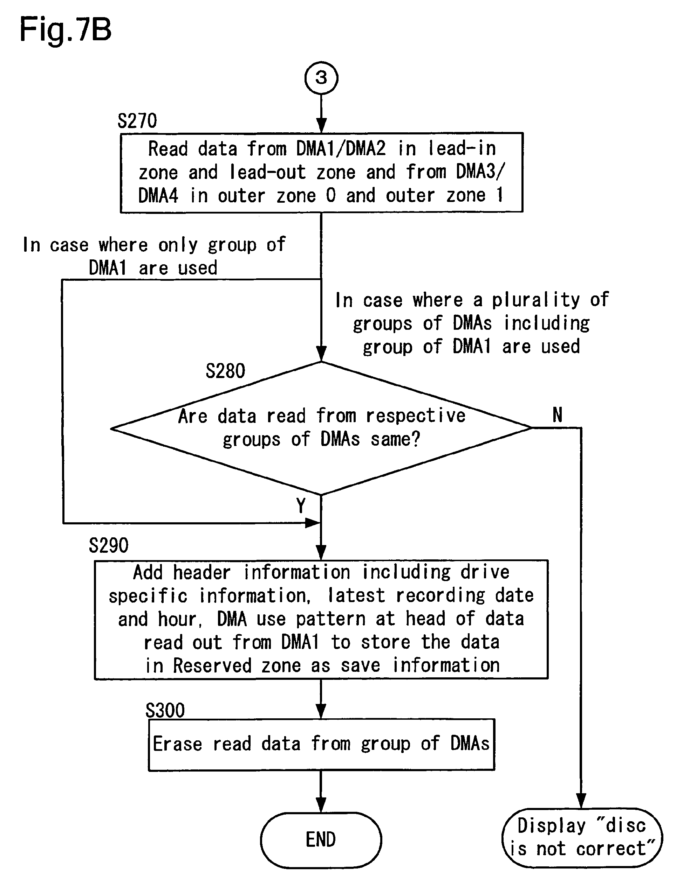

Next, hereinafter, a second embodiment of high speed erasing process by the optical disc apparatus according to the present invention will be explained with reference to a flow chart shown in Fig. 7A and Fig. 7B.

Because the process is same as the process shown in Fig. 5A and Fig. 5B of the above described first embodiment other than step S250 and step S290 in Fig. 7A and Fig. 7B, detailed explanation is omitted. Hereinafter step S250 and step S290 will be explained.

In step S250, by utilizing the disc recording and reproducing portion 3, the control portion 5 adds a header information at a head of the data which is read out from the DMA1 to record the data in a Reserved zone (for example, Reserved 3, 2, 1 shown in Fig. 2) which is included in the disc as a save information. At this point the header information is drive specific information, the latest recording date and hour information which is recorded on the disc, and in addition, a DMA use pattern information.

Further, in step S290, by utilizing the disc recording and reproducing portion 3, the control portion 5 adds the header information at a head of the data which are read out from the group of DMA1 to record the data in the Reserved zone (for example, Reserved 3, 2, 1 shown in Fig. 2) which is included in the disc as a save information. At this point the header information is the drive specific information, the latest recording date and hour information which is recorded on the disc, and in addition, the DMA use pattern information.

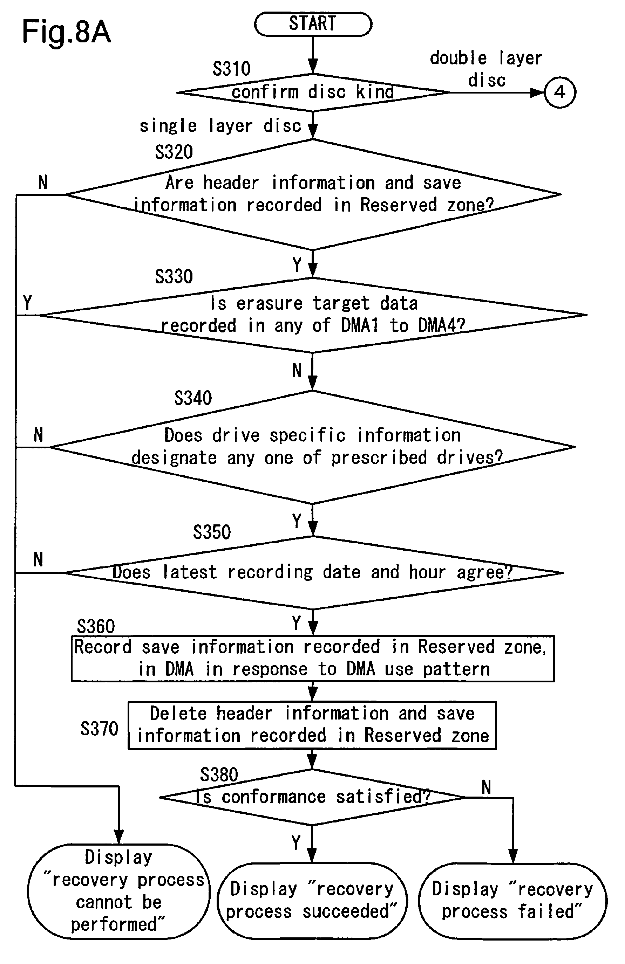

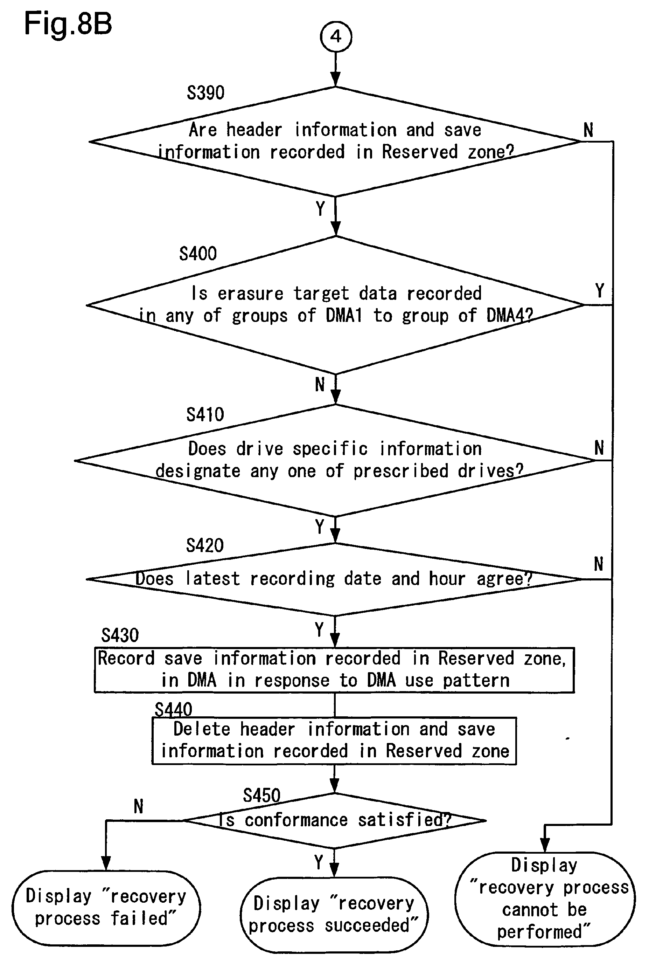

Next, hereinafter, a second embodiment of the disc recovery process by the optical disc apparatus according to the present invention will be explained with reference to a flow chart shown in Fig. 8A and Fig. 8B.

When an operation to start the disc recovery process is performed in the remote controller 11 and the control portion 5 receives a coded signal from the remote control command receiving portion 10, the control portion 5 confirms the disc kind information which is stored in the RAM 9 in step S310. In case where the disc kind information designates a single layer disc of a BD-RE, the process proceeds to step S320.

In step S320, by utilizing the disc recording and reproducing portion 3, the control portion 5 confirms whether the header information and the save information are recorded in the Reserved zone which is included in the disc, or not. In case where any of the header information and the save information is not recorded (N in step S320), the control portion 5 makes an instruction for the OSD portion 6 to generate the graphic and character signal to display on a television or the like that the disc recovery process cannot be performed and the disc recovery process is interrupted. In case where the header information and the save information are recorded in the Reserved zone in step S320 (Y in step S320), the process proceeds to step S330.

In step S330, by utilizing the disc recording and reproducing portion 3, the control portion 5 confirms whether the erasure target data is recorded in any one of the DMA1 to DMA4 which is included in the disc, or not. In case where it is recorded (Y in step S330), the control portion 5 makes an instruction for the OSD portion 6 to generate the graphic and character signal to display on a television or the like that the disc recovery process cannot be performed and the disc recovery process is interrupted. By this step it becomes possible to exclude any disc on which the user data is newly recorded after the high speed erasing process from an object of the recovery process. In case where the erasure target data is not recorded in any of the DMA1 to DMA4 in step S330 (N in step S330), the process proceeds to step S340.

In step S340, by utilizing the disc recording and reproducing portion 3, the control portion 5 confirms whether the drive specific information which is recorded in the Reserved zone that is included in the disc designates one of the prescribed drives, or not. If it does not designate any of the prescribed drives (N in step S340), the control portion 5 makes an instruction for the OSD portion 6 to generate the graphic and character signal to display on a television or the like that the disc recovery process cannot be performed and the disc recovery process is interrupted. By this step it becomes possible to exclude a disc which has been processed by an optical disc apparatus which is not compatible from an object of the recovery process. In step S340 in case where the drive specific information designates one of the prescribed drives (Y in step S340), the process proceeds to step S350.

In step S350, by utilizing the disc recording and reproducing portion 3, the control portion 5 confirms whether the latest recording date and hour information which is recorded in the Reserved zone that is included in the disc agrees with the latest recording date and hour information which is recorded in the disk when the user data is recorded, or not. In case where they do not agree (N in step S350), the control portion 5 makes an instruction for the OSD portion 6 to generate the graphic and character signal to display on a television or the like that the disc recovery process cannot be performed and the disc recovery process is interrupted. By this step a disc can be excluded from the object of the recovery process even when the high speed erasing process is performed on the disc by the optical disc apparatus according to the present invention then another optical disc apparatus newly records user data and performs the high speed erasing process on the disc. In step S350 in case where each of the latest recording date and hour information agrees (Y in step S350), the process proceeds to step S360.

In step S360, by an instruction from the control portion 5, the disc recording and reproducing portion 3 records the save information which is recorded in the Reserved zone, in the DMA that is included in the disc in response to the DMA use pattern information that is recorded in the Reserved zone. For example, in case where the DMA use pattern information designates only the DMA1, the save information is recorded only in the DMA1 included in the disc. In case where the DMA use pattern information designates the DMA1 to DMA4, the save information is recorded in the DMA1 to DMA4 that are included in the disc.

Then in step S370, the control portion 5 deletes the header information and the save information which are recorded in the Reserved zone utilizing the disc recording and reproducing portion 3.

In step S380, by utilizing the disc recording and reproducing portion 3, the control portion 5 confirms conformance of the data which are recorded in all the DMAs that are included in the disc and are used, with the user data which is recorded in the user data zone that is included in the disc. In case where the conformance is not satisfied for any of the DMAs that are used (N in step S380), the control portion 5 makes an instruction for the OSD portion 6 to generate the graphic and character signal to display on a television or the like that the recovery process fails. In case where the conformance is satisfied for all the DMAs that are used (Y in step S380), the control portion 5 makes an instruction for the OSD portion 6 to generate the graphic and character signal to display on a television or the like that the recovery process succeeds.

In step S310 described above, in case where the disc kind information designates the double layer disc of BD-RE, the process proceeds to step S390 (Fig. 8B).

In step S390, by utilizing the disc recording and reproducing portion 3, the control portion 5 confirms whether the header information and the save information are recorded in the Reserved zone that are included in the disc, or not. In case where any of the header information and the save information is not recorded (N in step S390), the control portion 5 makes an instruction for the OSD portion 6 to generate the graphic and character signal to display on a television or the like that the disc recovery process cannot be performed and the disc recovery process is interrupted. Further in step S390, in case where the header information and the save information are recorded in the Reserved zone (Y in step S390), the process proceeds to step S400.

In step S400, by utilizing the disc recording and reproducing portion 3, the control portion 5 confirms whether the erasure target data is recorded in any of the groups of DMA1 to DMA4 that are included in the disc, or not. In case where the data is recorded (Y in step S400), the control portion 5 makes an instruction for the OSD portion 6 to generate the graphic and character signal to display on a television or the like that the disc recovery process cannot be performed and the disc recovery process is interrupted. By this step it becomes possible to exclude any disc on which the user data is newly recorded after the high speed erasing process from an object of the recovery process. Further in step S400, in case where the erasure target data is not recorded in any of the groups DMA1 to DMA4 (N in step S400), the process proceeds to step S410.

In step S410, by utilizing the disc recording and reproducing portion 3, the control portion 5 confirms whether the drive specific information which is recorded in the Reserved zone that is included in the disc designates one of the prescribed drives, or not. If it does not designate any of the prescribed drives (N in step S410), the control portion 5 makes an instruction for the OSD portion 6 to generate the graphic and character signal to display on a television or the like that the disc recovery process cannot be performed and the disc recovery process is interrupted. By this step it becomes possible to exclude a disc which is processed by an optical disc apparatus which is not compatible, from an object of the recovery process. In step S410 in case where the drive specific information designates one of the prescribed drives (Y in step S410), the process proceeds to step S420.

In step S420, by utilizing the disc recording and reproducing portion 3, the control portion 5 confirms whether the latest recording date and hour information which is recorded in the Reserved zone that is included in the disc agrees with the latest recording date and hour information which is recorded in the disk when the user data is recorded, or not. In case where they do not agree (N in step S420), the control portion 5 makes an instruction for the OSD portion 6 to generate the graphic and character signal to display on a television or the like that the disc recovery process cannot be performed and the disc recovery process is interrupted. By this step a disc can be excluded from the object of the recovery process even when the optical disc apparatus according to the present invention performs the high speed erasing process on the disc then another optical disc apparatus records newly user data then performs the high speed erasing process on the disc. In step S420 in case where each of the latest recording date and hour information agrees (Y in step S420), the process proceeds to step S430.

In step S430, by an instruction from the control portion 5, the disc recording and reproducing portion 3 records the save information which is recorded in the Reserved zone, in the group of DMAs that are included in the disc in response to the DMA use pattern information that is recorded in the Reserved zone. For example, in case where the DMA use pattern information designates only the group of DMA1, the save information is recorded only in the group of DMA1 included in the disc. In case where the DMA use pattern information designates the groups of DMA1 to DMA4, the save information is recorded in the groups of DMA1 to DMA4 included in the disc.

Then in step S440, the control portion 5 deletes the header information and the save information which are recorded in the Reserved zone utilizing the disc recording and reproducing portion 3.

In step S450, by utilizing the disc recording and reproducing portion 3, the control portion 5 confirms conformance of the data which is recorded in all the groups of DMAs that are included in the disc and are used with the user data which is recorded in the user data zone that are included in the disc. In case where the conformance is not satisfied for any of the group of DMAs that are used (N in step S450), the control portion 5 makes an instruction for the OSD portion 6 to generate the graphic and character signal to display on a television or the like that the recovery process fails. In case where the conformance is satisfied for all the groups of DMAs that are used (Y in step S450), the control portion 5 makes an instruction for the OSD portion 6 to generate the graphic and character signal to display on a television or the like that the recovery process succeeds.

As above described according to the present embodiment, it becomes possible to make the user data possible to be read again by recovering the data of DMA saved in the Reserved zone included in the disc into the disc, when a user desires to make the user data possible to be read again even after the high speed erasing process is performed for a BD-RE and the disc is in a state which is equivalent to a blank disc.

In the optical disc apparatus which performs the high speed erasing process and the disc recovery process according to the above described second embodiment, when the operation to start the user data recording is performed in the remote controller 11, by utilizing the disc recording and reproducing portion 3, the control portion 5 confirms whether the header information and the save information are portion 5 confirms whether the header information and the save information are recorded in the Reserved zone which is included in the disc, or not. If they are recorded, these informations become useless after the user data is recorded, therefore, it is preferable that the header information and the save information which are recorded in the Reserved zone are deleted by the disc recording and reproducing portion 3, then the user data is recorded on the disc.
Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. An optical disc apparatus including a storage medium, the apparatus comprising:
a readout portion that reads out data from at least one Defect Management Area (DMA) or at least one group of the DMAs which is included in a Blu-ray Disc REwritable (BD-RE);
a storing portion that stores one of the data which is read out by the readout portion, in the storage medium;
an erasing portion that erases the data which is read out by the readout portion, from the at least one DMA or the at least one group of the DMAs; and
a recording portion that records the data which is stored in the storage medium, in at least one DMA or at least one group of the DMAs which is included in BD-RE.

2. The optical disc apparatus according to claim 1, **characterized in that**
the storing portion stores latest recording date and hour information which is recorded on BD-RE and/or a Manufacturer's Identification (MID) code which is recorded on BD-RE, in the storage medium, and
the recording portion switches whether the recording is performed or not in response to comparison result between latest recording date and hour information which is recorded on BD-RE and latest recording date and hour information which is stored in the storage medium, and/or a comparison result between MID code which is recorded on BD-RE and MID code which is stored in the storage medium.

3. The optical disc apparatus according to claim 1 or claim 2, further comprising a confirming portion that confirms conformance of the data that is recorded in the DMA or in the group of the DMAs in which the recording is performed after the recording portion performs the recording, with user data which is recorded in user data zone which is included in the BD-RE.

4. The optical disc apparatus according to any one of claim 1 to claim 3, **characterized in that** in response to result whether or not respective data which are read out by the readout portion from a plurality of the DMAs or from a plurality of groups of the DMAs are same, the storage portion switches whether the storage is performed or not, and the erasing portion switches whether the erasing is performed or not.

5. An optical disc apparatus comprising:
a readout portion that reads out data from at least one Defect Management Area (DMA) or at least one group of the DMAs which is included in a Blu-ray Disc REwritable (BD-RE);
a first recording portion that records one of the data which is read out by the readout portion, in a prescribed zone which is included in the BD-RE;
an erasing portion that erases the data which is read out by the readout portion, from the at least one DMA or the at least one group of the DMAs; and
a second recording portion that records data which is recorded in the prescribe zone, in at least one DMA or at least one group of the DMAs which is included in BD-RE.

6. The optical disc apparatus according to claim 5, **characterized in that**
the first recording portion records drive specific information and/or latest recording date and hour information which is recorded on the BD-RE, in the prescribed zone, and
the second recording portion switches whether the recording is performed or not in response to result whether drive specific information which is recorded in the prescribed zone, designates one of prescribed drives and/or in response to comparison result between latest recording date and hour information which is recorded on BD-RE and latest recording date and hour information which is recorded in the prescribed zone.

7. The optical disc apparatus according to claim 5 or claim 6, further comprising a confirming portion that confirms conformance of the data that is recorded in the DMA or in the group of the DMAs in which the recording is performed after the second recording portion performs the recording, with user data which is recorded in user data zone which is included in the BD-RE.

8. The optical disc apparatus according to any one of claim 5 to claim 7, **characterized in that** in response to result whether or not respective data which are read out by the readout portion from a plurality of the DMAs or from a plurality of groups of the DMAs are same, the first recording portion switches whether the recording is performed or not, and the erasing portion switches whether the erasing is performed or not.
